# EUROPEAN PATENT APPLICATION

(11) **EP 3 339 086 A1**
(43) Date of publication of application: **27.06.2018**
(21) Application number: 17203271.6
(22) Date of filing: 23.11.2017
(51) Int. Cl.: B60L 11/18, H02J 7/00

(54) **MOTOR VEHICLE AND CHARGE AND DISCHARGE CONTROL CIRCUIT THEREOF**

(30) Priority: 25.11.2016 CN 201611060401
(71) Applicant: Optimum Battery Co., Ltd., Shenzhen City, Guangdong 518118 (CN)
(72) Inventor: WU, Kuan, Shenzhen, Guangdong 518118 (CN); Peng, Jun Yi, Shenzhen, Guangdong 518118 (CN)
(74) Representative: Fry, Emma Leland

(57) **Abstract**

The present invention provides a charge and discharge control circuit including a control module and a plurality of charge and discharge modules. Each charge and discharge module includes a first switch, a recharger, a battery pack, and an acquisition unit. When the control module receives a discharging signal, the control module controls each first switch to be turned on, each recharger is powered by a corresponding battery pack through a corresponding the first switch. The control module determines a voltage level of each battery pack, according to a voltage signal received from a corresponding acquisition unit, controls the recharger corresponded to the battery pack with a high level voltage to increase an output current, and controls the recharger corresponded to the battery pack with a low level voltage to decrease an output current. The present invention further provides a motor vehicle having the charge and discharge control circuit.

## Description

### BACKGROUND OF THE INVENTION

### Field of the Invention

This invention relates to motor vehicles, and more particular, to a motor vehicle having a charge and discharge control circuit.

### Description of the Related Art

Generally, some motor vehicles use a plurality of battery packs connected in parallel to store electric energy, and to charge electric vehicles. Each battery pack includes a plurality of rechargeable batteries. However, characteristics of each rechargeable battery will appear a difference in a long-term charge and discharge process, and there will be a voltage difference between the battery packs. Because a resistance of each rechargeable battery is very small, usually about milliohms, and a 1 volts voltage difference will cause a 20 amperes current flowed back. That is, a voltage difference between the battery packs will cause a large current flowed back, the large current flowed back will cause damage to components of a motor vehicle, and the motor vehicle may not work properly.

Additionally, a battery pack with a low level voltage will be charged preferentially, and a battery pack with a high level voltage will be discharged preferentially. Therefore, the battery packs cannot be charged or discharged at the same time, utilization of the battery packs will be reduced, and time required for charging and discharging will be prolonged.

It is desirable to provide an invention, which can overcome the problems and limitations mentioned above.

### SUMMARY OF THE INVENTION

The present invention is directed to a motor vehicle and a charge and discharge control circuit of the motor vehicle that substantially obviates one or more of the problems due to limitations and disadvantages of the related art.

In an aspect of the present invention, there is provided a charge and discharge control circuit comprising a control module and a plurality of charge and discharge modules. Each charge and discharge module comprises a first switch electrically coupled to the control module; a recharger electrically coupled to the control module; a battery pack electrically coupled to the recharger through the first switch; and an acquisition unit electrically coupled to the battery pack and the control module. Each acquisition unit is configured to collect a voltage signal and a current signal of a corresponding battery pack, and transmit the voltage signal and the current signal to the control module. When the control module receives a discharging signal, the control module controls each first switch to be turned on, each recharger is powered by a corresponding battery pack through a corresponding the first switch. The control module determines a voltage level of each battery pack, according to the voltage signal received from a corresponding acquisition unit, controls the recharger corresponded to the battery pack with a high level voltage to increase an output current, and controls the recharger corresponded to the battery pack with a low level voltage to decrease an output current.

In another aspect of the present invention, there is provided a motor vehicle comprising a discharge interface and a charge and discharge control circuit. The discharge interface is configured to electrically coupled to an electric vehicle. The charge and discharge control circuit is configured to charge the electric vehicle through the discharge interface. The charge and discharge control circuit comprises a control module, and a plurality of charge and discharge modules. Each charge and discharge module comprises a first switch electrically coupled to the control module; a recharger electrically coupled to the control module and the discharge interface; a battery pack electrically coupled to the recharger through the first switch; and an acquisition unit electrically coupled to the battery pack and the control module. Each acquisition unit is configured to collect a voltage signal and a current signal of a corresponding battery pack, and transmit the voltage signal and the current signal to the control module. When the control module receives a discharging signal, the control module controls each first switch to be turned on, each recharger is powered by a corresponding battery pack through a corresponding the first switch, and the electric vehicle is charged by each recharger through the discharge interface. The control module determines a voltage level of each battery pack, according to the voltage signal received from a corresponding acquisition unit, controls the recharge corresponded to the battery pack with a high level voltage to increase an output current, and controls the recharger corresponded to the battery pack with a low level voltage to decrease an output current.

It is to be understood that both the foregoing general description and the following detailed description are exemplary and explanatory and are intended to provide further explanations of the invention as claimed.

### BRIEF DESCRIPTION OF THE DRAWINGS

Implementations of the present technology will now be described, by way of example only, with reference to the attached drawings. It may be understood that these drawings are not necessarily drawn to scale, and in no way limit any changes in form and detail that may be made to the described embodiments by one skilled in the art without departing from the spirit and scope of the described embodiments.
FIG. 1 is a block schematic diagram of a motor vehicle provided by one embodiment of the present invention, wherein the motor vehicle comprises a charge and discharge control circuit comprising a plurality of charge and discharge modules.
FIG. 2 is block schematic diagram of the motor vehicle of FIG. 1 electrically coupled to an electric vehicle and a charging station.
FIG. 3 is a block schematic diagram of each charge and discharge module of FIG. 1.

### DETAILED DESCRIPTION OF THE PREFERRED EMBODIMENTS

In order to make the purposes, technical solutions, and advantages of the present invention be clearer, the present invention will be further described in detail hereafter with reference to the accompanying drawings and embodiments. However, it will be understood by those of ordinary skill in the art that the embodiments described herein can be practiced without these specific details. In other instances, methods, procedures and components have not been described in detail so as not to obscure the related relevant feature being described. Also, it should be understood that the embodiments described herein are only intended to illustrate but not to limit the present invention.

Several definitions that apply throughout this disclosure will be presented. The term "coupled" is defined as connected, whether directly or indirectly through intervening components, and is not necessarily limited to physical connections. The connection can be such that the objects are permanently connected or releasably connected. The term "comprise", when utilized, means "include, but not necessarily limited to"; it specifically indicates open-ended inclusion or membership in a so-described combination, group, series and the like.

It should be noted that references to "an" or "one" embodiment in this disclosure are not necessarily to the same embodiment, and such references mean "at least one."

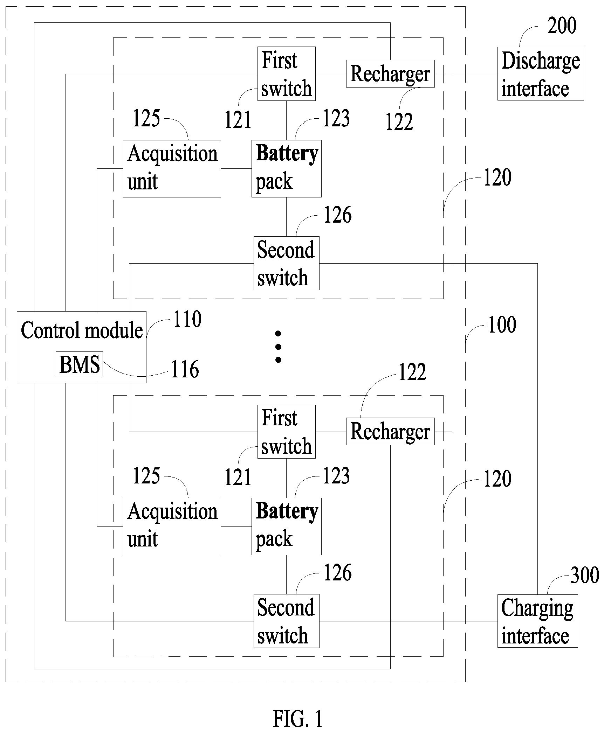

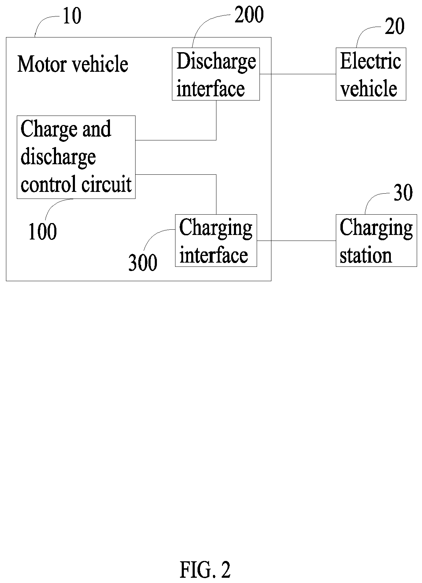

Please refer to Figs. 1 and 2, a motor vehicle 10 provided by one embodiment of the present invention comprises a charge and discharge control circuit 100, a discharge interface 200, and a charging interface 300. The charge and discharge control circuit 100 is electrically coupled to the discharge interface 200 and the charging interface 300. The discharge interface 200 is configured to electrically coupled to an electric vehicle 20. The charging interface 300 is configured to electrically coupled to a charging station 30. The charge and discharge control circuit 100 is configured to charge the electric vehicle 20 through the discharge interface 200, and to be charged by the charging station 30 through the charging interface 300.

The charge and discharge control circuit 100 comprises a control module 110 and a plurality of charge and discharge modules 120. Each charge and discharge module 120 comprises a first switch 121, a recharger 122, a battery pack 123, and an acquisition unit 125. Each battery pack 123 is electrically coupled a corresponding acquisition unit 125, and electrically coupled to a corresponding recharger 122 through a corresponding first switch 121. Each recharger 122 is electrically coupled to the discharge interface 200. The control module 110 is electrically coupled to each first switch 121, each recharger 122, and each acquisition unit 125.

Each acquisition unit 125 is configured to collect a voltage signal and a current signal of a corresponding battery pack 123, and transmit the voltage signal and the current signal to the control module 110. When the control module 110 receives a discharging signal, the control module 110 controls each first switch 121 to be turned on, each recharger 122 is powered by a corresponding battery pack 123 through a corresponding the first switch 121, and the electric vehicle 20 is charged by each recharger 122 through the discharge interface 200. The control module 110 determines a voltage level of each battery pack 123, according to the voltage signal received from a corresponding acquisition unit 125, controls the recharger 122 corresponded to the battery pack 123 with a high level voltage to increase an output current, and controls the recharger 122 corresponded to the battery pack 123 with a low level voltage to decrease an output current.

It may be understood that, a reference voltage range of the battery packs 123 may be preset. The control module 110 compares the voltage signal of each battery pack 123 with the reference voltage range. If the voltage signal of a battery pack 123 is greater than a maximum value of the reference voltage range, the control module 110 determines the battery pack 123 has the high level voltage. If the voltage signal of a battery pack 123 is less than a minimum value of the reference voltage range, the control module 110 determines the battery pack 123 has the low level voltage.

Each charge and discharge module 120 further comprises a second switch 126 electrically coupled to a corresponding battery pack 123, the control module 110, and the charging interface 300. When the control module 110 receives a charging signal, the control module 110 controls each second switch 126 to be turned on, each battery pack 123 is charged by the charging station 30 through the charging interface 300 and a corresponding second switch 126. The control module 110 further controls the battery pack 123 with the high level voltage to decrease an input current, and controls the battery pack 123 with the low level voltage to increase an input current.

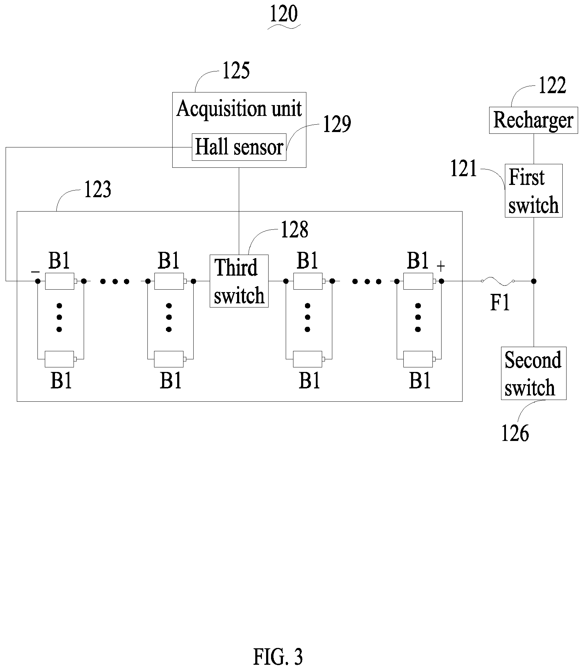

FIG. 3 illustrates a block schematic diagram of each charge and discharge module 120 provided by one embodiment of the present invention. Each battery pack 123 comprises comprising a plurality of rechargeable batteries B1 configured in series, parallel or a mixture of both to store and deliver electric energy. Each battery pack 123 further comprises a third switch 128 electrically coupled to the rechargeable batteries B1 in series, and electrically coupled to a corresponding acquisition unit 125. When the acquisition unit 125 collects the voltage signal and the current signal of the battery pack 123, the third switch 128 is turned on by the acquisition unit 125. When the acquisition unit 125 does not collect the voltage signal and the current signal of the battery pack 123, or the voltage signal or the current signal of the battery pack 123 is abnormal, the third switch 128 is turned off by the acquisition unit 125.

Each charge and discharge module 120 further comprises a fuse F1 electrically coupled to the battery pack 123, the first switch 121, and the second switch 126. The fuse F1 is configured to prevent a large current from damaging electronic components (such as the battery pack 123, the first switch 121, and the second switch 126 in the charge and discharge control circuit 100.

In one embodiment, the control module 110 comprises a battery management system (BMS) 116. A number of the charge and discharge modules 120 can be adjusted to according to actual need. Each acquisition unit 125 comprises a Hall sensor 129. Each of the first switch 121, the second switch 126, and the third switch 128 comprises at least one of a contactor, a relay, an insulated gate bipolar transistor, a metal-oxide-semiconductor field-effect transistor, and a bipolar junction transistor. The motor vehicle 10 is an electric vehicle, a fuel vehicle, or a hybrid electric vehicle.

The operation principle of the motor vehicle 10 and the charge and discharge control circuit 100 of the motor vehicle 10 provided by one embodiment of the present invention will be described below.

In operate, each acquisition unit 125 controls a corresponding third switch 128 to be turned on, collects a voltage signal and a current signal of a corresponding battery pack 123, and transmits the voltage signal and the current signal to the control module 110. In one embodiment, when an acquisition unit 125 does not collect a voltage signal and a current signal of a corresponding battery pack 123, or the voltage signal or the current signal of the corresponding battery pack 123 is abnormal, the acquisition unit 125 controls a corresponding third switch 128 to be turned off, to protect the corresponding battery pack 123 and save electricity.

When the discharge interface 200 is electrically coupled to the electric vehicle 20, and the control module 110 receives the discharging signal, the control module 110 controls each first switch 121 to be turned on. Each recharger 122 is powered by a corresponding battery pack 123 through a corresponding the first switch 121. The electric vehicle 20 is charged by each recharger 122 through the discharge interface 200. The control module 110 determines a voltage level of each battery pack 123, according to the voltage signal received from a corresponding acquisition unit 125, controls the recharger 122 corresponded to the battery pack 123 with the high level voltage to increase an output current, and controls the recharger 122 corresponded to the battery pack 123 with the low level voltage to decrease an output current. Therefore, the battery packs 123 can achieve discharge balancing.

When the charging interface 300 is electrically coupled to the charging station 30, and the control module 110 receives the charging signal, the control module 110 controls each second switch 126 to be turned on. Each battery pack 123 is charged by the charging station 30 through the charging interface 300 and a corresponding second switch 126. The control module 110 further controls the battery pack 123 with the high level voltage to decrease an input current, and controls the battery pack 123 with the low level voltage to increase an input current. Therefore, the battery packs 123 can achieve charging balancing.

As detailed above, each battery pack 123 has a charge and discharge control circuit 100, and each charge and discharge control circuit 100 comprises a recharger 122. Therefore, there is no parallel loop between the battery packs 123, and there is no large current flowed back, even if there is a voltage difference between the battery packs 123. That is, the charge and discharge control circuit 100 can prevent large current from being flowed back effectively.

When the battery packs 123 are discharged, the control module 110 controls each first switch 121 to be turned on, controls the recharger 122 corresponded to the battery pack 123 with the high level voltage to increase an output current, and controls the recharger 122 corresponded to the battery pack 123 with the low level voltage to decrease an output current. Therefore, the battery packs 123 can achieve discharge balancing, a discharge time is shortened, and utilization of the battery packs 123 is improved.

When the battery packs 123 are charged, the control module 110 controls each second switch 126 to be turned on, controls the battery pack 123 with the high level voltage to decrease an input current, and controls the battery pack 123 with the low level voltage to increase an input current. Therefore, the battery packs 123 can achieve charging balancing, a charging time is shortened, and utilization of the battery packs 123 is improved.

It will be apparent to those skilled in the art that various modification and variations can be made in the multicolor illumination device and related method of the present invention without departing from the spirit or scope of the invention. Thus, it is intended that the present invention cover modifications and variations that come within the scope of the appended claims and their equivalents.

## Claims

1. A charge and discharge control circuit (100), comprising:
a control module (110); and
a plurality of charge and discharge modules (120), each charge and discharge module (120) comprising:
a first switch (121) electrically coupled to the control module (110);
a recharger (122) electrically coupled to the control module (110);
a battery pack (123) electrically coupled to the recharger (122) through the first switch (121); and
an acquisition unit (125) electrically coupled to the battery pack (123) and the control module (110), the acquisition unit (125) configured to collect a voltage signal and a current signal of the battery pack (123), and transmit the voltage signal and the current signal to the control module (110);
wherein on condition that the control module (110) receives a discharging signal, the control module (110) controls each first switch (121) to be turned on, each recharger (122) is powered by a corresponding battery pack (123) through a corresponding the first switch (121); and
wherein the control module (110) determines a voltage level of each battery pack (123), according to the voltage signal received from a corresponding acquisition unit (125), controls the recharger (122) corresponded to the battery pack (123) with a high level voltage to increase an output current, and controls the recharger (122) corresponded to the battery pack (123) with a low level voltage to decrease an output current.

2. The charge and discharge control circuit (100) of claim 1, wherein each charge and discharge module (120) further comprises a second switch (126) electrically coupled to the battery pack (123), the control module (110), and a charging interface (300); and
wherein on condition that the control module (110) receives a charging signal, the control module (110) controls each second switch (126) to be turned on, each battery pack (123) is charged by the charging interface (300) through a corresponding second switch (126), the control module (110) further controls the battery pack (123) with a high level voltage to decrease an input current, and controls the battery pack (123) with a low level voltage to increase an input current.

3. The charge and discharge control circuit (100) of claim 2, wherein each charge and discharge module (120) further comprises a fuse (F1) electrically coupled to the battery pack (123), the first switch (121), and the second switch (126).

4. The charge and discharge control circuit (100) of claim 2, wherein each of the first switch (121) and the second switch (126) comprises at least one of a contactor, a relay, an insulated gate bipolar transistor, a metal-oxide-semiconductor field-effect transistor, and a bipolar junction transistor.

5. The charge and discharge control circuit (100) of claim 1, wherein each battery pack (123) comprises comprising a plurality of rechargeable batteries (B1) configured in series, parallel or a mixture of both to store and deliver electric energy.

6. The charge and discharge control circuit (100) of claim 5, wherein each battery pack (123) further comprises a third switch (128) electrically coupled to the rechargeable batteries (B1) in series, and electrically coupled to a corresponding acquisition unit (125);
wherein on condition that the acquisition unit (125) collects the voltage signal and the current signal of the battery pack (123), the third switch (128) is turned on by the acquisition unit (125); and
wherein on condition that the acquisition unit (125) does not collect the voltage signal and the current signal of the battery pack (123), or the voltage signal or the current signal of the battery pack (123) is abnormal, the third switch (128) is turned off by the acquisition unit (125).

7. The charge and discharge control circuit (100) of claim 6, wherein the third switch (128) comprises at least one of a contactor, a relay, an insulated gate bipolar transistor, a metal-oxide-semiconductor field-effect transistor, and a bipolar junction transistor.

8. The charge and discharge control circuit (100) of claim 1, wherein the control module (110) compares the voltage signal of each battery pack (123) with a reference voltage range; on condition that the voltage signal of a battery pack (123) is greater than a maximum value of the reference voltage range, the control module (110) determines the battery pack (123) has the high level voltage; on condition that the voltage signal of a battery pack (123) is less than a minimum value of the reference voltage range, the control module (110) determines the battery pack (123) has the low level voltage.

9. The charge and discharge control circuit (100) of claim 1, wherein the control module (110) comprises a battery management system (116).

10. The charge and discharge control circuit (100) of claim 1, wherein each acquisition unit (125) comprises a Hall sensor (129).

11. A motor vehicle (10), comprising:
a discharge interface (200) configured to electrically coupled to an electric vehicle (20); and
a charge and discharge control circuit (100) configured to charge the electric vehicle (20) through the discharge interface (200), the charge and discharge control circuit (100) comprising:
a control module (110); and
a plurality of charge and discharge modules (120), each charge and discharge module (120) comprising:
a first switch (121) electrically coupled to the control module (110);
a recharger (122) electrically coupled to the control module (110) and the discharge interface (200);
a battery pack (123) electrically coupled to the recharger (122) through the first switch (121); and
an acquisition unit (125) electrically coupled to the battery pack (123) and the control module (110), the acquisition unit (125) configured to collect a voltage signal and a current signal of the battery pack (123), and transmit the voltage signal and the current signal to the control module (110);
wherein on condition that the control module (110) receives a discharging signal, the control module (110) controls each first switch (121) to be turned on, each recharger (122) is powered by a corresponding battery pack (123) through a corresponding the first switch (121), and the electric vehicle (20) is charged by each recharger (122) through the discharge interface (200); and
wherein the control module (110) determines a voltage level of each battery pack (123), according to the voltage signal received from a corresponding acquisition unit (125), controls the recharger (122) corresponded to the battery pack (123) with a high level voltage to increase an output current, and controls the recharger (122) corresponded to the battery pack (123) with a low level voltage to decrease an output current.

12. The motor vehicle (10) of claim 11, wherein the motor vehicle (10) further comprises a charging interface (300) configured to electrically coupled to a charging station (30), and the charge and discharge control circuit (100) is further configured to be charged by the charging station (30) through the charging interface (300);
wherein each charge and discharge module (120) further comprises a second switch (126) electrically coupled to the battery pack (123), the control module (110), and the charging interface (300); and
wherein on condition that the control module (110) receives a charging signal, the control module (110) controls each second switch (126) to be turned on, each battery pack (123) is charged by the charging station (30) through the charging interface (300) and a corresponding second switch (126), and the control module (110) further controls the battery pack (123) with a high level voltage to decrease an input current, and controls the battery pack (123) with a low level voltage to increase an input current.

13. The motor vehicle (10) of claim 12, wherein each charge and discharge module (120) further comprises a fuse (F1) electrically coupled to the battery pack (123), the first switch (121), and the second switch (126).

14. The motor vehicle (10) of claim 12, wherein each of the first switch (121) and the second switch (126) comprises at least one of a contactor, a relay, an insulated gate bipolar transistor, a metal-oxide-semiconductor field-effect transistor, and a bipolar junction transistor.

15. The motor vehicle (10) of claim 11, wherein each battery pack (123) comprises comprising a plurality of rechargeable batteries (B1) configured in series, parallel or a mixture of both to store and deliver electric energy.

16. The motor vehicle (10) of claim 15, wherein each battery pack (123) further comprises a third switch (128) electrically coupled to the rechargeable batteries (B1) in series, and electrically coupled to a corresponding acquisition unit (125);
wherein on condition that the acquisition unit (125) collects the voltage signal and the current signal of the battery pack (123), the third switch (128) is turned on by the acquisition unit (125); and
wherein on condition that the acquisition unit (125) does not collect the voltage signal and the current signal of the battery pack (123), or the voltage signal or the current signal of the battery pack (123) is abnormal, the third switch (128) is turned off by the acquisition unit (125).

17. The motor vehicle (10) of claim 16, wherein the third switch (128) comprises at least one of a contactor, a relay, an insulated gate bipolar transistor, a metal-oxide-semiconductor field-effect transistor, and a bipolar junction transistor.

18. The motor vehicle (10) of claim 11, wherein the control module (110) compares the voltage signal of each battery pack (123) with a reference voltage range; on condition that the voltage signal of a battery pack (123) is greater than a maximum value of the reference voltage range, the control module (110) determines the battery pack (123) has the high level voltage; on condition that the voltage signal of a battery pack (123) is less than a minimum value of the reference voltage range, the control module (110) determines the battery pack (123) has the low level voltage.

19. The motor vehicle (10) of claim 11, wherein the control module (110) comprises a battery management system (116).

20. The motor vehicle (10) of claim 11, wherein the motor vehicle (10) is an electric vehicle, a fuel vehicle, or a hybrid electric vehicle.
